# EUROPÄISCHE PATENTANMELDUNG

(11) **EP 4 503 397 A1**
(43) Veröffentlichungstag der Anmeldung: **05.02.2025**
(21) Anmeldenummer: 24190613.0
(22) Anmeldetag: 24.07.2024
(51) Int. Cl.: H02K 5/22, H02K 11/33

(54) **ANSCHLUSSVORRICHTUNG FÜR EINE ELEKTRISCHE MASCHINE, ELEKTRISCHE MASCHINE UND VERFAHREN ZUM HERSTELLEN EINER ANSCHLUSSVORRICHTUNG FÜR EINE ELEKTRISCHE MASCHINE**

(30) Priorität: 04.08.2023 DE 102023207486
(71) Anmelder: Robert Bosch GmbH, 70442 Stuttgart (DE)
(72) Erfinder: Szabo, Daniel, 1103 Budapest (HU); Katlan, Gergo Jozsef, 1115 Budapest (HU); Arias Arias, Jose Luis, 28007 Madrid (ES)

(57) **Zusammenfassung**

Die Erfindung betrifft ein Anschlusselement für eine mehrphasige elektrische Maschine. Das Anschlusselement ist hierbei derart einfach ausgestaltet, dass es mittels eines einfachen Spritzgussprozesses realisiert werden kann, bei dem mehrere Sammelschienen-Elemente umspritzt werden. Durch Variation der Sammelschienen-Elemente kann eine hohe Flexibilität für das Anschlusselement der elektrischen Maschine bei einem gleichbleibenden Spritzgussprozess erreicht werden.

## Beschreibung

### Technisches Gebiet

Die vorliegende Erfindung betrifft eine Anschlussvorrichtung für eine elektrische Maschine, insbesondere eine mehrphasige elektrische Maschine. Die vorliegende Erfindung betrifft ferner eine elektrische Maschine mit einer solchen Anschlussvorrichtung. Weiterhin betrifft die vorliegende Erfindung ein Verfahren zum Herstellen einer Anschlussvorrichtung für eine elektrische Maschine.

### Stand der Technik

Ganz oder zumindest teilweise elektrisch angetriebene Fahrzeuge verfügen über ein elektrisches Antriebssystem, bei welche eine elektrische Maschine mittels eines elektrischen Stromrichters, insbesondere einem Wechselrichter (Inverter) mit elektrischer Energie versorgt wird, um das Fahrzeug anzutreiben. Optional kann beim Verzögern des Fahrzeugs in einem sogenannten Rekuperationsmodus die elektrische Maschine kinetische Energie des Fahrzeugs in elektrische Energie umwandeln. Die von der elektrischen Maschine dabei bereitgestellte Wechselspannung kann mittels des Stromrichters in eine elektrische Spannung konvertiert werden, die dazu geeignet ist, einen elektrischen Energiespeicher, beispielsweise eine Traktionsbatterie in dem Fahrzeug aufzuladen. Aufgrund der dabei auftretenden hohen elektrischen Leistungen müssen der elektrische Stromrichter und die elektrische Maschine dabei zuverlässig miteinander verbunden werden.

In der Druckschrift 10 2018 201 819 A1 wird eine elektrische Fahrzeugachsenvorrichtung beschrieben. Diese Fahrzeugachsenvorrichtung umfasst eine Leistungselektronik mit einem Inverter, einen Elektromotor sowie einem Getriebe.

### Offenbarung der Erfindung

Die vorliegende Erfindung offenbart eine Anschlussvorrichtung für eine elektrische Maschine, eine elektrische Maschine und ein Verfahren zum Herstellen einer Anschlussvorrichtung für eine elektrische Maschine mit den Merkmalen der unabhängigen Patentansprüche. Weitere vorteilhafte Ausführungsformen sind Gegenstand der abhängigen Patentansprüche.

### Demgemäß ist vorgesehen:

Eine Anschlussvorrichtung für eine mehrphasige elektrische Maschine mit mehreren Stromschienen-Elementen und einem elektrisch isolierenden Spritzgusselement. Hierbei ist für jede elektrische Phase der elektrischen Maschine ein Stromschienen-Element vorgesehen. Die mehreren Stromschienen-Elemente sind jeweils an vorbestimmten Positionen von dem Spritzgusselement umschlossen. Hierdurch sind die mehreren Stromschienen-Elemente fixiert. Die mehreren Stromschienen-Elemente können dabei aus einem unbeschichteten elektrisch leitfähigen Material, beispielsweise einem Metall, gebildet werden. Ferner ist jedes Stromschienen-Element dazu ausgebildet, jeweils an einem ersten Ende mit einem Statoranschluss der elektrischen Maschine elektrisch gekoppelt zu werden. Weiterhin ist jedes Stromschienen-Element dazu ausgebildet, an einem zweiten Ende mit einem Anschlusselement eines Wechselrichters elektrisch gekoppelt zu werden.

### Ferner ist vorgesehen:

Eine elektrische Maschine mit einem Gehäuse und einer erfindungsgemäßen Anschlussvorrichtung. Das Gehäuse ist dazu ausgebildet, einen Stator und einen Rotor der elektrischen Maschine aufzunehmen. Ferner weist das Gehäuse eine Öffnung auf. Hierbei ist jeweils ein Stromschienen-Element mit einer korrespondierenden Anschluss für eine Phase des Stators der elektrischen Maschine elektrisch gekoppelt.

### Schließlich ist vorgesehen:

Ein Verfahren zum Herstellen eines Anschlusselements für eine elektrische Maschine. Das Verfahren umfasst einen Schritt zum Bereitstellen mehrerer Stromschienen-Elemente. Hierbei wird für jede elektrische Phase der elektrischen Maschine ein Stromschienen-Element bereitgestellt. Weiterhin umfasst das Verfahren einen Schritt zum Anordnen der mehreren Stromschienen-Elemente in einer Spritzgussvorrichtung. Ferner umfasst das Verfahren einen Schritt zum Umspritzen der mehreren Stromschienen-Elemente mit einem elektrisch isolierenden Material. Auf diese Weise wird um die Stromschienen-Elemente ein elektrisch isolierendes Spritzgusselement ausgebildet. Die mehreren Stromschienen-Elemente können dabei jeweils aus einem unbeschichteten elektrisch leitfähigen Material gebildet werden. Jedes Stromschienen-Element ist dazu ausgebildet, jeweils an einem ersten Ende mit einem Statoranschluss der elektrischen Maschine elektrisch gekoppelt zu werden und an einem zweiten Ende mit einem Anschlusselement eines Wechselrichters elektrisch gekoppelt zu werden.

### Vorteile der Erfindung

Der vorliegenden Erfindung liegt die Erkenntnis zugrunde, dass für den Anschluss einer mehrphasigen elektrischen Maschine an eine Stromquelle, wie beispielsweise einen elektrischen Stromrichter (Inverter), ein geeigneter Anschluss vorgesehen sein muss. Dieser Anschluss muss an einem Ende dazu ausgebildet sein, die einzelnen elektrischen Phasen an dem Stator der elektrischen Maschine elektrisch zu kontaktieren, und an dem anderen Ende muss das Anschlusselement entsprechend den Anforderungen zur Kontaktierung an dem elektrischen Stromrichter ausgebildet sein. Aufgrund der Vielzahl von bereits existierenden und zukünftigen Varianten von elektrischen Maschinen und elektrischen Stromrichtern muss hierbei jeweils ein individuelles, geeignetes Anschlusselement an der elektrischen Maschine geschaffen werden.

Es ist daher eine Idee der vorliegenden Erfindung, ein Konzept für ein solches Anschlusselement zum Verbinden der elektrischen Maschine mit einem Stromrichter zu schaffen, welches auf besonders einfache Weise für die jeweiligen Anforderungen individuell angepasst hergestellt werden kann. Insbesondere soll ein Anschlusselement geschaffen werden, das so konstruiert ist, dass der hierzu erforderliche Fertigungsprozess sehr einfach und damit kostengünstig auf die jeweiligen Anforderungen für elektrische Maschine und anzuschließenden Stromrichter angepasst werden kann.

Hierzu ist es vorgesehen, das Anschlusselement zur Kontaktierung der elektrischen Maschine mit einem Stromrichter durch einfache, unbeschichtet elektrisch leitende Stromschienen-Elemente auszuführen, wobei Stromschienen-Elemente in einem Zwischenbereich mittels eines Spritzgusselements fixiert werden. Dabei kann das Spritzgusselement ferner an eine Öffnung der elektrischen Maschine angepasst werden, an welcher das Anschlusselement in die Maschine eingebracht werden soll. Somit ist für gleiche Öffnungen an Gehäusen von elektrischen Maschinen jeweils nur eine einheitliche Form für das Spritzgusselement erforderlich.

Darüber hinaus können die einzelnen Stromschienen-Elemente jeweils auf sehr einfache Weise individuell an die jeweiligen Anforderungen angepasst werden. Hierbei können die einen Enden der Stromschienen-Elemente entsprechend Anschlüssen für den Stator der elektrischen Maschine angepasst werden, und die anderen Enden der Stromschienen-Elemente können entsprechend einer Kontaktierung an dem Wechselrichter angepasst werden. Eine solche Anpassung von den Stromschienen-Elementen kann sehr einfach durch entsprechende Metallbearbeitung erreicht werden. Daraufhin können die Stromschienen-Elemente in eine Spritzgussvorrichtung eingebracht werden und in dem Spritzgussverfahren das Spritzgusselement hergestellt werden, welches die Stromschienen-Elemente in ihrer Position fixiert. Dieses Spritzgusselement stellt gleichzeitig den Verschluss des Gehäuses der elektrischen Maschine dar, durch welchen das Anschlusselement in die elektrische Maschine eingebracht wird.

Damit kann das erfindungsgemäße Anschlusselement sehr einfach durch Bereitstellen entsprechender Stromschienen-Elemente in einen Spritzgussprozess gefertigt werden. Bei gleichartigen Öffnungen in dem Gehäuse für das Anschlusselement kann in der Regel eine gleiche Form der Spritvorrichtung genutzt werden. Somit steht eine einfache kostengünstige und sehr flexible Möglichkeit für das Herstellen der erforderlichen Anschlusselemente zur Verfügung.

Gemäß einer Ausführungsform weist jedes Stromschienen-Element in einem Bereich des umschließenden Spritzgusselements eine Aussparung zur Fixierung des Stromschienen-Elements in dem Spritzgusselement auf. Beispielsweise können in den Stromschienen-Elementen Rillen, Vertiefungen, Löcher o. ä. vorgesehen sein, in welchen das Spritzgussmaterial beim Herstellen des Spritzgusselements eindringt und somit ein Verschieben, Bewegen o. ä. von den Stromschienen-Elementen verhindert.

Gemäß einer Ausführungsform umfasst das Spritzgusselement mehrere umspritzte Buchsen. Die einzelnen Buchsen können hierbei derart ausgestaltet sein, dass das Anschlusselement mittels einer Schraube mit einem Gehäuse der elektrischen Maschine verschraubt wird. Beispielsweise können solche Buchsen während des Herstellens des Spritzgusselements ebenfalls in die Spritzgussform eingebracht und umspritzt werden. Buchsen können dabei aus einem beliebigen geeigneten Material, beispielsweise einem Metall oder ähnlichem hergestellt sein.

Gemäß einer Ausführungsform weist das Spritzgusselement eine umlaufende Aussparung auf. Diese Aussparung kann dazu ausgelegt sein, ein Dichtelement zum Abdichten eines Bereichs zwischen der Anschlussvorrichtung und einem Gehäuse der elektrischen Maschine aufzunehmen. Durch eine solche Aussparung kann dabei eine besonders gute Abdichtung zwischen dem Spritzgusselement und dem Gehäuse realisiert werden.

Gemäß einer Ausführungsform ist an dem Spritzgusselement ein Dichtelement zum Abdichten des Bereichs zwischen der Anschlussvorrichtung und dem Gehäuse der elektrischen Maschine vorgesehen. Das Dichtelement kann beispielsweise aus einem Elastomer oder ähnlichem hergestellt sein. Zum Beispiel kann es sich bei dem Dichtelement um eine umlaufende Gummidichtung handeln.

Gemäß einer Ausführungsform umfassen die Stromschienen-Elemente jeweils einen Halteabschnitt. Dieser Halteabschnitt kann dazu ausgebildet sein, während eines Spritzgussprozesses zum Anbringen des Spritzgusselements das Stromschienen-Element zu fixieren. Ein solcher Halteabschnitt kann auf einer Seite der Stromschienen-Elemente vorgesehen sein, welche in Richtung des Anschlussbereichs für den Stromrichter weist. Zusätzlich oder alternativ kann ein solcher Halteabschnitt auch auf der gegenüberliegenden Seite der Stromschienen-Elemente vorgesehen sein, welcher von dem Spritzgusselement in Richtung des Anschlusses für die Statorwicklungen weist. Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
Fig. 1: eine schematische Darstellung eines Querschnitts durch eine Anschlussvorrichtung gemäß einer Ausführungsform;
Fig. 2: eine schematische Draufsicht auf eine Anschlussvorrichtung gemäß einer Ausführungsform;
Fig. 3: eine schematische Darstellung einer elektrischen Maschine mit einer Anschlussvorrichtung gemäß einer Ausführungsform; und
Fig. 4: ein Ablaufdiagramm, wie es einem Verfahren zum Herstellen einer Anschlussvorrichtung gemäß einer Ausführungsform zugrunde liegt.

### Beschreibung von Ausführungsformen

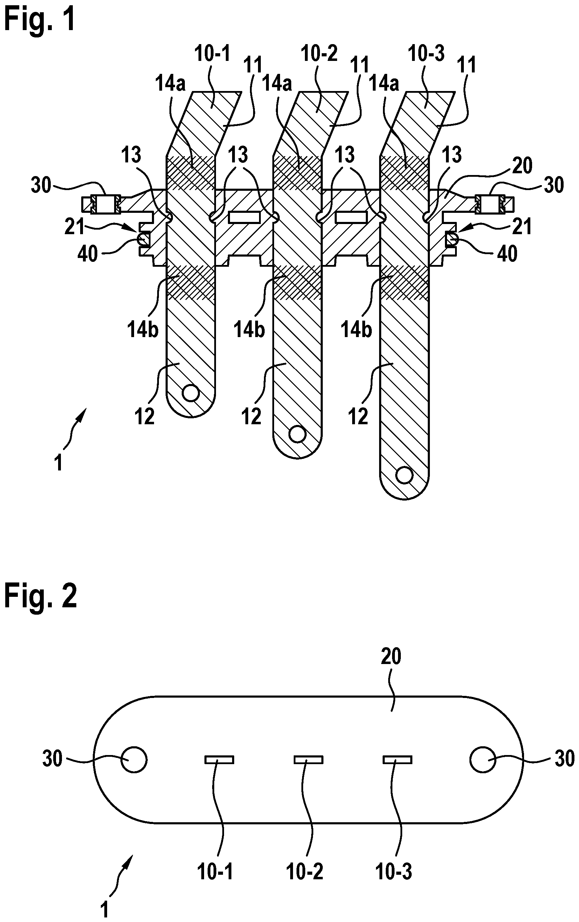

Figur 1 zeigt eine schematische Darstellung eines Querschnitts durch eine Anschlussvorrichtung 1 für eine elektrische Maschine gemäß einer Ausführungsform. Die Anschlussvorrichtung 1 umfasst mehrere Stromschienen-Elemente 10-i. Die Anzahl der Stromschienen-Elemente 10-i entspricht hierbei in der Regel der Anzahl der elektrischen Phasen in der elektrischen Maschine. Neben der hier dargestellten üblichen Anzahl von drei Stromschienen-Elementen 10-i sind jedoch grundsätzlich auch Ausführungsform mit einer hiervon abweichenden Anzahl von Stromschienen-Elementen möglich.

Die einzelnen Stromschienen-Elemente 10-i können in einem ersten, hier oben dargestellten Bereich 11 derart ausgebildet sein, dass sie mit einem elektrischen Stromrichter für die elektrische Maschine verbunden werden können. Gegebenenfalls kann die Form dabei derart angepasst werden, dass eine direkte Kontaktierung mit dem Stromrichter möglich ist.

In einem gegenüberliegenden, hier unten dargestellten Bereich 12 können die einzelnen Stromschienen-Elemente 10-i derart ausgebildet sein, dass sie mit den Anschlüssen für die Phasenwicklungen am Stator der elektrischen Maschine verbunden werden können.

Auch hierbei können Länge, Form, Anschlussbereich, etc. entsprechend den Anforderungen für den Anschluss angepasst werden.

Die einzelnen Stromschienen-Elemente 10-i sind dabei aus einem elektrischen leitfähige Material, beispielsweise Kupfer oder ähnlichem hergestellt. Dabei ist gegebenenfalls keine besondere Beschichtung des Materials für die Stromschienen-Elemente 10-i erforderlich.

In einem mittleren Bereich sind die Stromschienen-Elemente 10-i mittels eines Spritzgusselements 20 fixiert. Das Spritzgusselement 20 ist dabei elektrisch isolierend. Dabei gewährleistet das Spritzgusselement 20, dass die Stromschienen-Elemente 10-i an ihrer gewünschten Position sind und eine ausreichende Isolation zwischen den einzelnen Stromschienen-Elementen 10-i vorhanden ist.

Zur besseren Fixierung können an den Stromschienen-Elementen 10-i Aussparungen 13 vorgesehen sein. Bei diesen Aussparungen 13 kann es sich, wie in Figur 1 dargestellt, beispielsweise um Einkerbungen o. ä. handeln. Grundsätzlich sind jedoch auch andere geeignete Ausgestaltungen möglich, die sicherstellen, dass die Stromschienen-Elemente 10-i zuverlässig durch das Spritzgusselement 20 gehalten werden.

Für das Herstellen des Anschlusselements 1 können die einzelnen Stromschienen-Elemente 10-i beispielsweise in eine Form einer Spritzgussvorrichtung eingelegt werden. Um die Stromschienen-Elemente 10-i während des Spritzgussvorgangs zu fixieren, kann zwischen der Position des Spritzgusselements 20 und den Anschlussbereichen 11 bzw. 12 für den Stromrichter bzw. die Statorwicklungen ein Haltebereich 14a, 14b vorgesehen sein. An diesem Halsbereich 14a, 14b können die Stromschienen-Elemente 10-i während des Spritzgussprozesses durch eine geeignete Haltevorrichtung fixiert werden, bis das Spritzgussmaterial ausgehärtet ist.

Ferner können in der Anschlussvorrichtung 1 eine oder mehrere Buchsen 30 vorgesehen sein. Bei diesen Buchsen kann es sich um Öffnungen handelt, durch welche eine Schraube geführt werden kann, um das Anschlusselement 1 an einem Gehäuse der elektrischen Maschine zu verschrauben. Beispielsweise können für die Buchsen auch geeignete Buchsenelemente aus Metall oder einem anderen geeigneten Material vorgesehen sein, welche während des Herstellens des Spritzgusselement 20 ebenfalls mit umspritzt werden.

Weiterhin kann in dem Spritzgusselement 20 eine Aussparung 21 vorgesehen sein, in welche ein Dichtelement 40 eingebracht werden kann. Bei dieser Aussparung kann es sich beispielsweise um eine vollständig umlaufende Aussparung handeln, in die ein Dichtelement 40 wie zum Beispiel ein Gummiring o. ä. eingebracht wird. Grundsätzlich kann ein beliebiges geeignetes Dichtmaterial, beispielsweise ein Elastomer o. ä. als Dichtelement 40 eingesetzt werden. Neben der in Figur 1 dargestellten Ausführungsform, bei welcher das Dichtelement 40 am seitlichen Rand der Anschlussvorrichtung 1 vorgesehen ist, ist es auch möglich, dass Dichtelement 40 und somit auch die entsprechende Aussparung 21 an einer Seite vorzusehen, welche in Richtung der Anschlussbereiche 12 für die Statorwicklungen weist.

Figur 2 zeigt eine schematische Darstellung einer Draufsicht auf eine Anschlussvorrichtung 1 gemäß der Ausführungsform. Die hierbei dargestellten Komponenten für die Stromschienen-Elemente 10-i, das Spritzgusselement 20, die Buchsen 30, etc. entsprechend den korrespondierenden Komponenten gemäß Figur 1.

Die Ausgestaltung des Spritzgusselements 20 ist dabei entsprechend einer Öffnung ausgebildet, in die das Anschlusselement 1 an dem Gehäuse einer elektrischen Maschine eingebracht wird. Somit kann das Spritzgusselement 20 diese Öffnung vollständig verschließen. Zur Befestigung des Anschlusselements 1 an dem Gehäuse der elektrischen Maschine kann das Spritzgusselement 20 an den Buchsen 30 mit dem Gehäuse verschraubt werden. Werden dabei beispielsweise selbstsichernde Schrauben verwendet, so kann ein sichere und zuverlässige Verriegelung gewährleistet werden. Diesem Fall kann gegebenenfalls auf eine Absicherung mittels Interlock oder ähnlichem verzichtet werden.

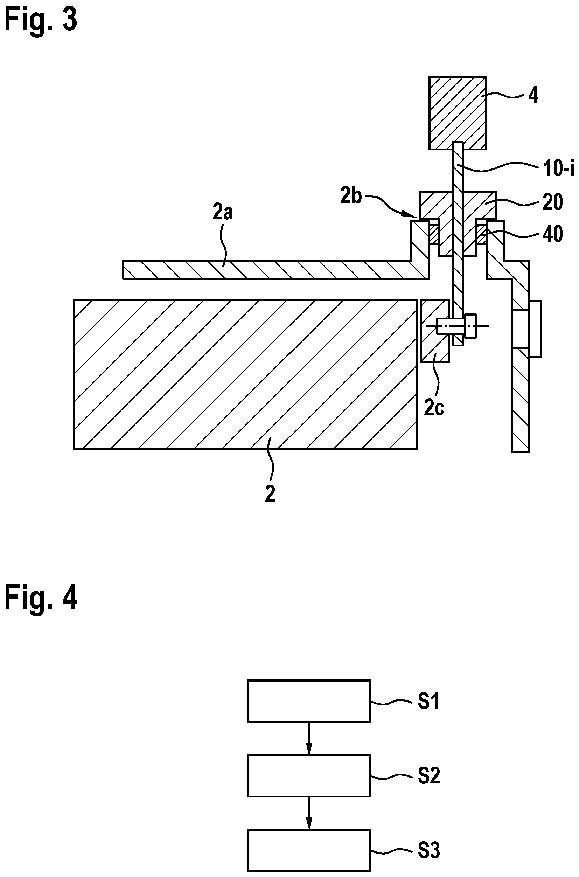

Figur 3 zeigt eine schematische Darstellung eines Querschnitts zur Veranschaulichung des Anschlusses einer elektrischen Maschine mit einem Anschlusselement 1 gemäß einer Ausführungsform. Die elektrische Maschine umfasst dabei unter anderem einen Stator 2 mit entsprechenden Anschlüssen 2c für die Statorwicklungen. Die inneren Komponenten elektrischen Maschine sind dabei von einem Gehäuse 2a umgeben. An diesem Gehäuse 2 ist eine Öffnung 2b vorgesehen. In dieser Öffnung kann die erfindungsgemäße Anschlussvorrichtung 1 eingebracht werden. Daraufhin können die Anschlussbereiche 12 der Sammelschienen-Elemente 10-i mit den Anschlüssen 2c für die Statorwicklungen verbunden, beispielsweise verschraubt werden. An den gegenüberliegenden Enden der Sammelschienen-Elemente 10-i können die Anschlussbereiche 11 mit einem elektrischen Stromrichter 4 oder einer anderen Spannungsquelle verbunden werden. Wie oben bereits beschrieben, kann das Anschlusselement 1 an den Buchsen 30 mit dem Gehäuse 2a verschraubt werden. Durch das Dichtelement 40 wird dabei eine sichere und zuverlässige Abdichtung erreicht.

Figur 4 zeigt ein Ablaufdiagramm, wie es einem Verfahren zum Herstellen eines Anschlusselements 1 gemäß einer Ausführungsform zugrunde liegt. Bei dem Anschlusselement 1 kann es sich dabei um das zuvor beschriebene Anschlusselement 1 handeln. Entsprechend kann das nachfolgende Verfahren beliebige Schritte aufweisen, die zur Herstellung eines solchen Anschlusselements 1 erforderlich sein können. Analog kann auch ein zuvor beschriebenes Anschlusselement 1 beliebige Komponenten aufweisen, wie sie bei der Herstellung des nachfolgend beschriebenen Verfahrens entstehen können.

In einem Schritt S 1 werden mehrere Stromschienen-Elemente 10-i bereitgestellt. Dabei wird für jede elektrische Phase der elektrischen Maschine ein Stromschienen-Element 10-i bereitgestellt. In Schritt S 2 erfolgt ein Anordnen der mehreren Stromschienen-Elemente 10-i in einer Spritzgussvorrichtung. Daraufhin erfolgt in Schritt S 3 ein Umspritzen der mehreren Stromschienen-Elemente 10-i mit einem elektrisch isolierenden Material. Hierdurch wird ein elektrisch isolierendes Spritzgusselement 20 ausgebildet.

Die mehreren Stromschienen-Elemente 10-i können dabei jeweils aus einem unbeschichteten elektrisch leitfähigen Material gebildet werden. Ferner ist jedes Stromschienen-Element 10-i dazu ausgebildet, jeweils an einem ersten Ende 11 mit einem Statoranschluss 2c der elektrischen Maschine elektrisch gekoppelt zu werden und an einem zweiten Ende 12 mit einem Anschlusselement eines Wechselrichters 4 elektrisch gekoppelt zu werden.

In einem weiteren Schritt kann ein umlaufendendes Dichtelements 40 an dem Spritzgusselement 20 angebracht werden. Dieses Dichtelement 40 kann beispielsweise in einer umlaufenden Aussparung 21 des Spritzgusselements 20 angebracht werden. Das Anbringen kann sowohl automatisiert als auch manuell erfolgen. Wie oben bereits ausgeführt, kann das Dichtelement 40 sowie die hierzu angepasste Aussparung 21 entweder zeitlich oder einer dem Gehäuse zugewandten Fläche vorgesehen sein Zusammenfassend betrifft die vorliegende Erfindung ein Anschlusselement für eine mehrphasige elektrische Maschine. Das Anschlusselement ist hierbei derart einfach ausgestaltet, dass es mittels eines einfachen Spritzgussprozesses realisiert werden kann, bei dem mehrere Sammelschienen-Elemente umspritzt werden. Durch Variation der Sammelschienen-Elemente kann eine hohe Flexibilität für das Anschlusselement der elektrischen Maschine bei einem gleichbleibenden Spritzgussprozess erreicht werden.

## Patentansprüche

1. Anschlussvorrichtung (1) für eine mehrphasige elektrische Maschine, mit:
mehreren Stromschienen-Elementen (10-i), wobei für jede elektrische Phase der elektrischen Maschine ein Stromschienen-Element (10-i) vorgesehen ist;
einem elektrisch isolierenden Spritzgusselement (20), das die mehreren Stromschienen-Elemente (10-i) jeweils an vorbestimmten Positionen umschließt und die mehreren Stromschienen-Elemente (10-i) dadurch fixiert,
wobei die mehreren Stromschienen-Elemente (10-i) jeweils aus einem unbeschichteten elektrisch leitfähigen Material gebildet werden, und
wobei jedes Stromschienen-Element (10-i) dazu ausgebildet ist, jeweils an einem ersten Ende (12) mit einem Statoranschluss (2a) der elektrischen Maschine elektrisch gekoppelt zu werden und an einem zweiten Ende (11) mit einem Anschlusselement eines Wechselrichters (4) elektrisch gekoppelt zu werden.

2. Anschlussvorrichtung (1) nach Anspruch 1, wobei jedes Stromschienen-Element (10-i) in einem Bereich des umschließenden Spritzgusselements (20) eine Aussparung (13) zur Fixierung des Stromschienen-Elements (10-i) in dem Spritzgusselement (20) aufweist.

3. Anschlussvorrichtung (1) nach Anspruch 1 oder 2, wobei das Spritzgusselement (20) mehrere umspritzte Buchsen (30) umfasst, wobei die Buchsen (30) dazu ausgestaltet sind, mittels einer Schraube das Anschlusselement mit einem Gehäuse (2a) der elektrischen Maschine zu verschrauben.

4. Anschlussvorrichtung (1) nach einem der Ansprüche 1 bis 3, wobei das Spritzgusselement (20) eine umlaufende Aussparung (21) aufweist, die dazu ausgelegt ist, ein Dichtelement (40) zum Abdichten eines Bereichs zwischen der Anschlussvorrichtung (1) und einem Gehäuse (2a) der elektrischen Maschine aufzunehmen.

5. Anschlussvorrichtung (1) nach Anspruch 4, mit einem Dichtelement (40) zum Abdichten des Bereichs zwischen der Anschlussvorrichtung (1) und dem Gehäuse (2a) der elektrischen Maschine.

6. Anschlussvorrichtung (1) nach einem der Ansprüche 1 bis 5, wobei die Stromschienen-Elemente (10-i) jeweils einen Halteabschnitt (14a, 14b) umfassen, der dazu ausgebildet ist, während eines Spritzgussprozesses zum Anbringen des Spritzgusselements (20) das Stromschienen-Element (10-i) zu fixieren.

7. Elektrische Maschine, mit:
einem Gehäuse (2a), das dazu ausgestaltet ist, einen Stator (2 und einen Rotor der elektrischen Maschine aufzunehmen; und
einer Anschlussvorrichtung (1) nach einem der Ansprüche 1 bis 6,
wobei das Gehäuse (2a) eine Öffnung für das Anschlusselement (1) aufweist, und
wobei jeweils ein Stromschienen-Element (10-i) mit einer korrespondierenden Phase des Stators (2) der elektrischen Maschine elektrisch gekoppelt ist.

8. Elektrische Maschine nach Anspruch 7, wobei das Anschlusselement (1) mittels selbstsichernder Schrauben mit dem Gehäuse (2a) der elektrischen Maschine verschraubt ist.

9. Verfahren zum Herstellen eines Anschlusselements (1) für eine elektrische Maschine, mit den Schritten:
Bereitstellen (S 1) mehrerer Stromschienen-Elementen (10-i), wobei für jede elektrische Phase der elektrischen Maschine ein Stromschienen-Element (10-i) bereitgestellt wird;
Anordnen (S 2) der mehreren Stromschienen-Elemente (10-i) in einer Spritzgussvorrichtung;
Umspritzen (S 3) der mehreren Stromschienen-Elemente mit einem elektrisch isolierenden Material, um ein elektrisch isolierendes Spritzgusselement (20) auszubilden,
wobei die mehreren Stromschienen-Elemente (10-i) jeweils aus einem unbeschichteten elektrisch leitfähigen Material gebildet werden, und
wobei jedes Stromschienen-Element (10-i) dazu ausgebildet ist, jeweils an einem ersten Ende (12) mit einem Statoranschluss (2c) der elektrischen Maschine elektrisch gekoppelt zu werden und an einem zweiten Ende (11) mit einem Anschlusselement eines Wechselrichters (4) elektrisch gekoppelt zu werden.

10. Verfahren nach Anspruch 9, mit einem Schritt zu Anbringen eines umlaufenden ein Dichtelements (40) in einer umlaufenden Aussparung (21) des Spritzgusselements.
